# EUROPÄISCHE PATENTSCHRIFT

(11) **EP 0 925 819 B1**
(45) Veröffentlichungstag und Bekanntmachung des Hinweises auf die Patenterteilung: **18.06.2003**
(21) Anmeldenummer: 97811005.4
(22) Anmeldetag: 19.12.1997
(51) Int. Cl.: B01D 45/16

(54) **Vorrichtung zum Reinigen schadstoffbelasteter Abluft**
Apparatus for cleaning exhaust air containing noxious products
Dispositif pour purifier des gaz d'échappement contenant des produits nocifs

(43) Veröffentlichungstag der Anmeldung: 30.06.1999
(73) Patentinhaber: Umwelttechnik 99 IPTC AG, 8493 Saland (CH)
(72) Erfinder: Stroitz, Winifred, 8493 Saland (CH); Tibor, Lenner, 8330 Pfäffikon ZH (CH)
(74) Vertreter: Clerc, Natalia

(56) Entgegenhaltungen:
- US-A- 3 895 930
- US-A- 4 622 048
- US-A- 4 678 588

## Beschreibung

Schadstoffbelastete Abluft, z.B. mit Aerosolteilchen und Staubteilchen belastete, muss vor dem Ausstoss ins Freie gereinigt werden. Dies geschieht mit Filtern, welche periodisch gewechselt werden müssen. Das Auswechseln und Entsorgen dieser Filter ist relativ teuer.

Der vorliegenden Erfindung liegt die Aufgabe zugrunde, eine Vorrichtung anzugeben, mittels welcher die Intervalle zwischen dem Auswechseln der Filter verlängert werden können. Diese Aufgabe wird durch die Merkmalskombination der Ansprüche gelöst.

Aus der US-A-4 678 588 ist an sich eine Vorrichtung zum Separieren von Substanzen mit unterschiedlicher Dichte aus einem kontinuierlichen Strom bekannt. Der Strom wird am oberen Ende tangential einem Eintritt eines zylindrischen Gehäuses zugeführt und unten tangential aus einem Austritt abgezogen. Dazwischen befindet sich im Gehäuse eine Wendel, welche die Gehäusewand längs deren ganzer Länge berührt. Im unteren Drittel des Gehäuses ist ein tangentialer Austritt für die dichtere Substanz angeordnet.

In der US-A-4 622 048 ist eine Vorrichtung zum Ausscheiden von einer Flüssigkeit aus einem Gas beschrieben. Das Gas wird dem Eintritt eines Gehäuses zugeführt und gelangt ins Eintrittsende eines gelochten Rohres. Im Rohr befindet sich eine Wendel, die das Gas auf eine wendelförmige Bahn umlenkt, wodurch Flüssigkeit aus dem Gas abgeschleudert wird. Sie tritt durch das gelochte Rohr ins Gehäuse.

Eine weitere Vortex-Trenneinrichtung ist in der US-A-3 895 930 beschrieben.

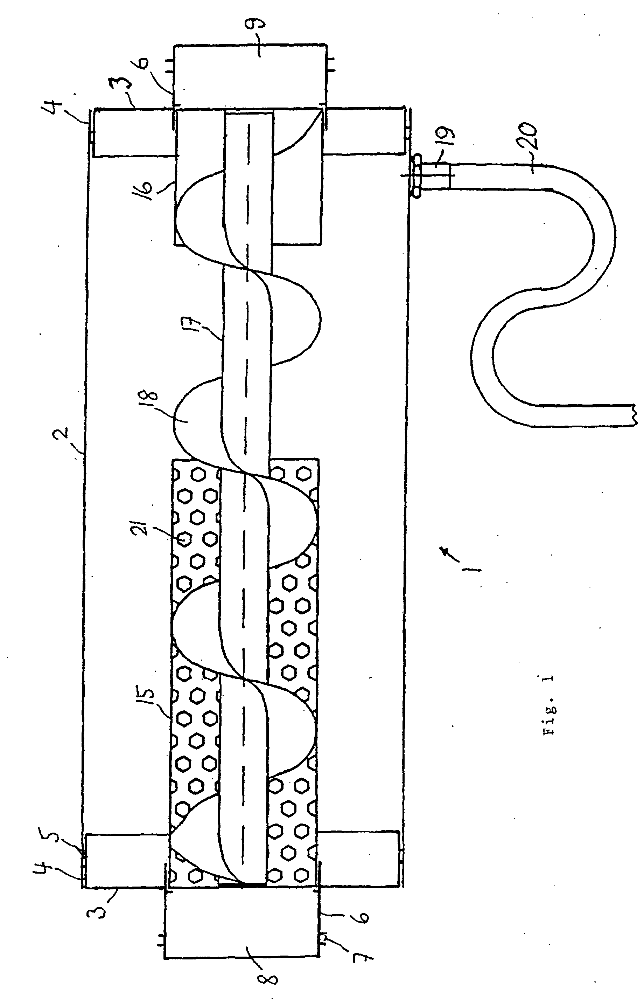

Nachfolgend wird ein Ausführungsbeispiel der Erfindung anhand der Zeichnung erläutert. Die einzige Figur zeigt einen schematischen Längsschnitt durch eine erfindungsgemässe Vorrichtung.

Die in der Figur dargestellte Vorrichtung wird einem nicht dargestellten Filter vorgeschaltet, vorzugsweise in jeder individuellen Zuleitung zu diesem Filter eingebaut. Die Vorrichtung hat ein Gehäuse 1 bestehend aus einem zylindrischen Rohr 2, das beidseits mit einem Deckel 3 abgeschlossen ist. Die Deckel 3 sind mit einem rohrförmigen Stutzen 4 ins Rohr 2 eingeschoben und mittels zweier Dichtlippen 5 abgedichtet. Sie können z.B. mit Blindnieten am Rohr 2 befestigt sein. Durch die Deckel 3 erstreckt sich je ein rohrförmiger Stutzen 6, der zwei weitere Dichtlippen 7 aufweist zum Abdichten gegenüber einer Rohrleitung, in welche die Vorrichtung eingebaut wird. Die Stutzen 6 ragen in das Rohr 2 hinein und bilden eine Eintrittsöffnung 8 und eine Austrittsöffnung 9 für die zu reinigende Abluft.

Die Stutzen 6 sind auf je ein Innenrohr 15, 16 übergeschoben. Das Rohr 15 am Eintrittsende erstreckt sich über etwas mehr als die Hälfte der Länge des Rohres 2, ist zu diesem koaxial und ist gelocht. Sein Durchmesser beträgt etwas weniger als die Hälfte des Durchmessers des Rohres 2. Das Rohr 16 am Austrittsende ist wesentlich kürzer. Über die ganze Länge des Rohres 2 erstreckt sich ein beidseits abgeschlossenes, koaxiales Zentralrohr 17, das eine Wendel 18 trägt. Der Aussendurchmesser der Wendel 18 entspricht dem Innendurchmesser der Rohre 15, 16. Zumindest im Bereich des Rohres 15 ist der durch die Wendel 18, das Zentralrohr 17 und das Rohr 15 gebildete Strömungsquerschnitt geringer, vorzugsweise um einen Faktor von mehr als 1,5, als der Durchflussquerschnitt durch den Stutzen 6. Auf der Unterseite ist am Rohr 2 ein Ablaufstutzen 19 montiert, an welchen ein transparenter, zu einem Siphon geformter Schlauch 20 angeschlossen ist.

Im Betrieb wird die durchströmende Abluft auf eine wendelförmige Bahn beschleunigt. Dadurch werden wie in einem Zyklotron mindestens die grösseren Aerosolteilchen ans Rohr 15 geschleudert, wo sie samt einem Teil der Staubteilchen aus der Abluft ausgeschieden werden. Ein Teil der Abluft tritt durch die Perforationen 21 des Rohres 15 ins Rohr 2 aus samt den im Rohr 15 angesammelten, grösseren Tropfen, die im Rohr 2 nach unten fallen. Am Ende des Rohrs 15 wird die Luft entspannt und weitere Aerosolteile werden durch die Rotation an die Wand von Rohr 2 geschleudert. Um das Rohr 16 herum erfolgt erneut eine Strömungsumlenkung am Dekkel 3. Hier werden weitere Aerosolteilchen und Staubpartikel abgeschleudert. Die sich im Schlauch 20 sammelnde Flüssigkeit wird periodisch oder kontinuierlich entleert. Dabei ermöglicht der durchsichtige Schlauch die Überwachung. Bei Versuchen mit einem Prototyp der erfindungsgemässen Vorrichtung konnten über 70% der in der Abluft enthaltenen Aerosolteilchen ausgeschieden werden. Dadurch kann die Standzeit eines nachgeschalteten Filters um einen Faktor 2-5 erhöht werden. Die Vorrichtung kann daher rasch amortisiert werden. Sie ist leicht zu reinigen. Um die Reinigung noch zusätzlich zu erleichtern, kann einer der Deckel 3 lösbar mit dem Rohr 2 verbunden sein, z.B. mittels Schrauben. Die Reinigung kann auch mittels eines Wasserstrahls, der durch den Stutzen 19 eingeführt wird, erfolgen.

## Patentansprüche

1. Vorrichtung zum Reinigen schadstoffbelasteter Abluft, umfassend ein Gehäuse (1) mit einer Eintrittsöffnung (8) und einer Austrittsöffnung (9), wobei zwischen der Eintritts- und Austrittsöffnung eine Wendel (18) angeordnet ist, welche anschliessend an die Eintrittsöffnung (8) von einem gelochten ersten Rohr (15) und benachbart der Austrittsöffnung (9) von einem zweiten Rohr (16) umgeben ist und die beiden Rohre (15, 16) Abstand voneinander haben.

2. Vorrichtung nach Anspruch 1, wobei der Strömungsquerschnitt zwischen der Wendel (18) und dem ersten Rohr (15) enger ist als der Eintrittsquerschnitt durch die Eintrittsöffnung (8).

3. Vorrichtung nach Anspruch 1 oder 2, wobei sich das erste Rohr (15) über mindestens die Hälfte der Länge des Gehäuses (1) erstreckt.

4. Vorrichtung nach einem der Ansprüche 1 bis 3, wobei am Gehäuse (1) ein Ablaufstutzen (19) montiert ist.

5. Vorrichtung nach Anspruch 4, wobei am Ablaufstutzen (19) ein transparentes Siphon (20) angeschlossen ist.

6. Vorrichtung nach einem der Ansprüche 1 bis 5, wobei das Gehäuse (1) zylindrisch ist.

7. , Vorrichtung nach einem der Ansprüche 1 bis 6, wobei die Wendel (18) auf einen zylindrischen Körper (17) montiert ist, der koaxial zum Gehäuse (1) angeordnet ist.

8. Vorrichtung nach einem der Ansprüche 1 bis 7, wobei das erste Rohr (15) länger ist als das zweite Rohr (16).

9. Vorrichtung nach Anspruch 8, wobei sich das erste Rohr (15) über mehr als die Hälfte der Länge des Gehäuses (2) erstreckt.

## Claims

1. Device for the purification of polluted exhaust air, comprising a housing (1) with an entry orifice (8) and an exit orifice (9), the entry orifice and exit orifice having arranged between them a helix (18) which is surrounded, following the entry orifice (8), by a perforated first tube (15) and, adjacent to the exit orifice (9), by a second tube (16), and the two tubes (15, 16) being at a distance from one another.

2. Device according to Claim 1, the flow cross section between the helix (18) and the first tube (15) being narrower than the entry cross section through the entry orifice (8).

3. Device according to Claim 1 or 2, the first tube (15) extending over at least half the length of the housing (1).

4. Device according to one of Claims 1 to 3, a discharge connection piece (19) being mounted on the housing (1).

5. Device according to Claim 4, a transparent syphon (20) being connected to the discharge connection piece (19).

6. Device according to one of Claims 1 to 5, the housing (1) being cylindrical.

7. Device according to one of Claims 1 to 6, the helix (18) being mounted on a cylindrical body (17) which is arranged coaxially to the housing (1).

8. Device according to one of Claims 1 to 7, the first tube (15) being longer than the second tube (16).

9. Device according to Claim 8, the first tube (15) extending over more than half the length of the housing (2).

## Revendications

1. Dispositif pour purifier des gaz d'échappement chargés de produits nocifs, comprenant un boîtier (1) avec une ouverture d'entrée (8) et une ouverture de sortie (9), une hélice (18) étant disposée entre l'ouverture d'entrée et l'ouverture de sortie, laquelle est entourée, directement à la suite de l'ouverture d'entrée (8), par un premier tube perforé (15) et à proximité de l'ouverture de sortie (9), par un deuxième tube (16) et les deux tubes (15, 16) étant espacés l'un de l'autre.

2. Dispositif selon la revendication 1, dans lequel la section transversale d'écoulement entre l'hélice (18) et le premier tube (15) est plus étroite que la section transversale d'entrée à travers l'ouverture d'entrée (8).

3. Dispositif selon la revendication 1 ou 2, dans lequel le premier tube (15) s'étend sur au moins la moitié de la longueur du boîtier (1).

4. Dispositif selon l'une quelconque des revendications 1 à 3, dans lequel une tubulure d'écoulement (19) est montée sur le boîtier (1).

5. Dispositif selon la revendication 4, dans lequel un siphon transparent (20) est raccordé à la tubulure d'écoulement (19).

6. Dispositif selon l'une quelconque des revendications 1 à 5, dans lequel le boîtier (1) est cylindrique.

7. Dispositif selon l'une quelconque des revendications 1 à 6, dans lequel l'hélice (18) est montée sur un corps cylindrique (17) qui est disposé coaxialement au boîtier (1).

8. Dispositif selon l'une quelconque des revendications 1 à 7, dans lequel le premier tube (15) est plus long que le deuxième tube (16).

9. Dispositif selon la revendication 8, dans lequel le premier tube (15) s'étend sur plus de la moitié de la longueur du boîtier (2).
